# EUROPÄISCHE PATENTSCHRIFT

(11) **EP 3 042 144 B1**
(45) Veröffentlichungstag und Bekanntmachung des Hinweises auf die Patenterteilung: **20.05.2020**
(21) Anmeldenummer: 14761814.4
(22) Anmeldetag: 27.08.2014
(51) Int. Cl.: B60N 2/888, B60N 2/865, F42B 3/04

(54) **KOPFSTÜTZE FÜR EINEN FAHRZEUGSITZ**
HEADREST FOR A VEHICLE SEAT
APPUI-TÊTE POUR SIÈGE DE VÉHICULE AUTOMOBILE

(30) Priorität: 02.09.2013 DE 102013014479
(43) Veröffentlichungstag der Anmeldung: 13.07.2016
(73) Patentinhaber: Adient Luxembourg Holding S.à r.l., 1855 Luxembourg (LU)
(72) Erfinder: DILLINGER, Thomas, 40880 Ratingen (DE)
(74) Vertreter: Schwöbel, Thilo K.
(86) Internationale Anmeldenummer: PCT/EP2014/068127
(87) Internationale Veröffentlichungsnummer: WO 2015/028486

(56) Entgegenhaltungen:
- EP-A2- 0 974 484
- WO-A1-2011/154150
- DE-A1-102008 011 325
- DE-B3-102007 041 498
- DE-B3-102008 011 324

## Beschreibung

### Stand der Technik

Die Erfindung betrifft eine Kopfstütze für einen Fahrzeugsitz, bei welcher zumindest ein dem Kopf des Sitzinsassen zugewandtes Teilstück der Kopfstütze unfallbedingt unter der Wirkung der Freigabe der Energie eines Energiespeichers aus einer Gebrauchsstellung zum Kopf des Sitzinsassen hin in eine Sicherheitsstellung verlagerbar ist.

Solche Kopfstützen werden auch als aktive Kopfstützen oder als crashaktive Kopfstützen bezeichnet. Solche aktive Kopfstützen weisen einen Mechanismus auf bzw. sind einem solchen zugeordnet, der in der Lage ist, den üblicherweise zwischen dem Hinterkopf eines in einer typischen Sitzposition befindlichen Sitzinsassen und einer Kopfstütze vorhandenen Raum bzw. Abstand dann zu verkleinern oder gänzlich zu beseitigen, wenn es zu einer Unfallsituation kommt, bei der insbesondere eine Beschleunigung des Fahrzeugs mit negativen Beschleunigungswerten auftritt, d.h. typischerweise bei einem Aufprall von hinten auf das Fahrzeug.

Ein Beispiel einer solchen Kopfstütze ist aus der Druckschrift DE 10 2004 016 474 B3 bekannt. Hierbei werden Teilstücke der Kopfstütze teleskopartig auseinanderbewegt, um eine Sicherheitsstellung der Kopfstütze einzunehmen. Ferner ist ein Aufstellmechanismus für eine Kopfstütze aus der Druckschrift WO 2007/056640 A2, sowie eine trapezoides Bauteil aus WO 2012/022386 A1 bekannt. Aus der DE102008011324 ist eine Kopfstütze bekannt, wobei die Kopfstütze mindestens ein dem Kopf eines Sitzinsassen zugewandtes erstes Teilstück aufweist, wobei die Kopfstütze ein zweites Teilstück aufweist, wobei zwischen dem ersten Teilstück und dem zweiten Teilstück mindestens ein Energiespeicher mit Auslöseaktuator angeordnet ist, wobei das erste Teilstück unfallbedingt unter der Wirkung einer Entladung des mittels des Auslöseaktuators angesteuerten Energiespeichers - relativ zum zweiten Teilstück - aus einer Gebrauchsstellung zum Kopf des Sitzinsassen hin entlang einer Verlagerungsrichtung in eine Sicherheitsstellung verlagerbar ist, wobei die Kopfstütze derart konfiguriert ist, dass während der unfallbedingten und durch die Wirkung der Entladung des Energiespeichers hervorgerufenen Verlagerung des ersten Teilstücks relativ zum zweiten Teilstück eine Vergrößerung des Volumens eines Expansionsraums bewirkt wird, wobei die Kopfstütze zur Abgrenzung des Expansionsraums ein Abdichtungsmittel zwischen dem ersten Teilstück und dem zweiten Teilstück aufweist.

Nachteilig bei bekannten aktiven Kopfstützen ist, dass sie einen relativ großen Bauraum, insbesondere in Längsrichtung, d.h. in normaler Blickrichtung eines Sitzinsassen des Fahrzeugsitzes, haben.

### Offenbarung der Erfindung

Der Erfindung liegt die Aufgabe zugrunde, eine Kopfstütze mit einer einfach sowie kompakt aufgebauten und wirkungsvollen Antriebseinrichtung bzw. einem Energiespeicher bereitzustellen, wobei der Bauraumbedarf und das Gewicht der Antriebseinrichtung bzw. des Energiespeichers bzw. insgesamt der Kopfstütze vergleichsweise gering ist und insbesondere der Bauraumbedarf in Längsrichtung besonders klein ist, d.h. die Kopfstütze besonders flach konstruiert ist.

Die Aufgabe wird gelöst durch eine Kopfstütze für einen Fahrzeugsitz, wobei die Kopfstütze mindestens ein dem Kopf eines Sitzinsassen zugewandtes erstes Teilstück aufweist, wobei die Kopfstütze ein zweites Teilstück aufweist, wobei zwischen dem ersten Teilstück und dem zweiten Teilstück mindestens ein Energiespeicher mit Auslöseaktuator angeordnet ist, wobei das erste Teilstück unfallbedingt unter der Wirkung einer Entladung des mittels des Auslöseaktuators angesteuerten Energiespeichers - relativ zum zweiten Teilstück - aus einer Gebrauchsstellung zum Kopf des Sitzinsassen hin entlang einer Verlagerungsrichtung in eine Sicherheitsstellung verlagerbar ist, wobei die Kopfstütze derart konfiguriert ist, dass während der unfallbedingten und durch die Wirkung der Entladung des Energiespeichers hervorgerufenen Verlagerung des ersten Teilstücks relativ zum zweiten Teilstück eine Vergrößerung des Volumens eines Expansionsraums bewirkt wird, wobei die Kopfstütze zur Abgrenzung des Expansionsraums ein Abdichtungsmittel zwischen dem ersten Teilstück und dem zweiten Teilstück aufweist.

Hierdurch ist es erfindungsgemäß in vorteilhafter Weise möglich, eine in der Gebrauchsstellung komfortable Kopfstütze bereitzustellen, die im Falle eines Unfalls einen Sitzinsassen schnell, aktiv und sicher vor einem Schleudertrauma schützen oder ein Schleudertrauma zumindest vermindern kann, indem die Kopfstütze mit der Möglichkeit der Einstellung der Gebrauchsstellung und der Sicherheitsstellung ausgestattet ist. Die erfindungsgemäße Kopfstütze ist einfach und vor allem bauraumkompakt, insbesondere bauraumkompakt in Längsrichtung des Fahrzeugs, herzustellen.

Der Energiespeicher ist insbesondere als Gasgenerator, insbesondere als ein kleiner Gasgenerator (micro gas generator) vorgesehen, insbesondere als kabelgebundener kleiner Gasgenerator (lead-wire micro gas generator) oder als bolzenausgelöster kleiner Gasgenerator (pintype micro gas generator). Ein Gasgenerator enthält typischerweise eine Zündeinheit und eine Treibladung ("Propellant"). Alternativ kann der Energiespeicher auch als ein Hitzegenerator oder als ein Wärmegenerator oder als ein kompakter Hitzegenerator oder als ein kompakter Wärmegenerator ausgebildet sein. Ein solcher Hitze- bzw. Wärmegenerator umfasst in der Regel im Wesentlichen einen Zünder, der eigentlich kein Gas generiert.

Zum generellen Aufbau und der Funktion solcher aktiver Kopfstützen wird ausdrücklich auf die Druckschrift DE 10 2004 016 474 B3 verwiesen.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der erfindungsgemäßen Kopfstütze bilden der Energiespeicher und der Aktuator eine Baueinheit, insbesondere in Form eines Gasgenerators oder eines Hitzegenerators oder eines Wärmegenerators oder eines kompakten Gasgenerators oder eines kompakten Hitzegenerators oder eines kompakten Wärmegenerators.

Hierdurch ist es in vorteilhafter Weise möglich, Standardkomponenten zu verwenden und so dass die erfindungsgemäße Kopfstütze einfach und kostengünstig modular produzierbar ist. Besonders bevorzugt sind der Auslöseaktuator und der Energiespeicher einteilig bzw. als eine Baueinheit ausgeführt, ganz besonders bevorzugt ist der Energiespeicher gleichzeitig der Aktuator, insbesondere ein kleiner Gasgenerator bzw. ein kleiner (kompakter) Hitze- bzw. Wärmegenerator. Hierdurch ist es in vorteilhafter Weise möglich, Bauteile einzusparen und damit die erfindungsgemäße Kopfstütze noch kostengünstiger herzustellen.

Gemäß einer weiteren bevorzugten Ausführungsform ist vorgesehen, dass der Energiespeicher ein pyrotechnischer Energiespeicher ist.

Erfindungsgemäß ist es vorgesehen, dass die Kopfstütze ein Verschiebemittel zur Verlagerung des ersten Teilstücks aus der Gebrauchsstellung in die Sicherheitsstellung aufweist.

Bevorzugt wird das Verschiebemittel im Falle eines Unfalls durch den Energiespeicher derart betätigt, dass das Verschiebemittel das erste Teilstück in die Sicherheitsstellung verlagert. Ganz besonders bevorzugt weist die Kopfstütze ein Verstärkungsmittel auf, insbesondere aus Metall, wobei das Verstärkungsmittel vorzugsweise mit dem ersten Teilstück und/oder mit dem zweiten Teilstück und/oder mit dem Verschiebemittel verbunden ist. Hierdurch ist es in vorteilhafter Weise möglich, dass die Verstellung von der Gebrauchsstellung sicher vorgenommen werden kann und das auch bei erheblichen wirkenden Kräften die Kopfstütze funktional bleibt und insbesondere nicht durch Bruchgefahr selber eine Gefahr für den Sitzinsassen darstellt.

Erfindungsgemäß ist vorgesehen, dass das Verschiebemittel mit dem ersten Teilstück und/oder mit dem zweiten Teilstück verrastbar ausgebildet ist, insbesondere bei in die Sicherheitsstellung des ersten Teilstücks relativ zum zweiten Teilstück bewegtem ersten Teilstück.

Vorzugsweise weist das Verschiebemittel ein erstes Verrastmittel auf, insbesondere eine asymmetrische zahnartige Struktur, in das ein bewegliches zweites Verrastmittel, insbesondere eine Stiftmittel, form- und/oder kraftschlüssig eingreift. Hierdurch ist es in vorteilhafter Weise möglich, dass ein unbeabsichtigtes Verstellen der Kopfstütze von der Gebrauchsstellung in die Sicherheitsstellung verhindert wird.

Gemäß einer weiteren bevorzugten Ausführungsform der Kopfstütze gemäß der vorliegenden Erfindung ist es vorgesehen, dass das Abdichtungsmittel ein O-Ring oder eine Mehrzahl von O-Ringen ist.

Gemäß einer weiteren bevorzugten Ausführungsform der Kopfstütze gemäß der vorliegenden Erfindung ist es vorgesehen, dass
-- ein erster O-Ring zwischen dem Versschiebemittel und dem ersten Teilstück und
-- ein zweiter O-Ring zwischen dem Verschiebemittel und dem zweiten Teilstück angeordnet ist. Dadurch kann das Verschiebemittel im Falle eines Unfalls ein Teil des Expansionsraums bilden, wobei der erste und der zweite O-Ring dafür sorgen, dass eine für eine wirkungsvolle Expansion erforderliche Abdichtung des Expansionsraums gegenüber der Umgebung sichergestellt wird. Durch den zusätzlichen Beitrag des Verschiebemittels lässt sich bei gleicher Dimensionierung des ersten und zweiten Teilstücks, mit dem Verschiebemittel eine Vergrößerung eines Schubweges, entlang dem das erste oder zweite Teilstück im Falle eines Unfalls bewegt wird, bewirken.

Gemäß einer weiteren bevorzugten Ausführungsform der Kopfstütze gemäß der vorliegenden Erfindung ist es vorgesehen, dass die Kopfstütze eine Kanalisierungsvorrichtung zur Kanalisierung des von dem pyrotechnischen Energiespeicher ausgehenden Überdrucks aufweist. Durch die Kanalisierungsvorrichtung wird der Überdruck so ausgerichtet, dass die Wirkung des Überdrucks sich in vorteilhafter Weise in erster Linie in eine Bewegung des ersten Teilstücks in Richtung der Vorschubbewegung übersetzt. Beispielsweise umfasst die Kanalisierungsvorrichtung einen trichterartiges Bauteil, das an den pyrotechnischen Energiespeicher mit einer Eingangsöffnung anschließt und mit einer Ausgangsöffnung auf das erste Teilstück gerichtet ist, wobei die Ausgangsöffnung größer ist als die EingangsöffnungHierdurch kann die Abdichtung des Expansionsraums mit einfachen Mitteln wirksam herbeigeführt werden.

Weiterhin ist es gemäß einer weiteren Ausführungsform erfindungsgemäß ferner bevorzugt, dass die Kopfstütze
-- in einem Fahrzeugsitz integriert angeordnet ist oder
-- über paarige Haltestangen mit einer Sitzrückenlehne eines Fahrzeugsitzes verbunden ist.

Hierdurch ist es erfindungsgemäß möglich, das Kopfstützenkonzept der vorliegenden Erfindung auch verschiedene Sitzkonfigurationen anzuwenden.

Ferner weist das erste Teilstück gemäß einer bevorzugten Ausführungsform wenigstens ein Polsterelement auf.

Hierdurch wird in vorteilhafter Weise ein höherer Komfort für den Sitzinsassen des Fahrzeugsitzes ermöglicht.

Erfindungsgemäß ist es ferner bevorzugt, dass das zweite Teilstück relativ zum Fahrzeugsitz oder relativ zur Sitzrückenlehne des Fahrzeugsitzes verstellbar, insbesondere in Längsrichtung verschiebbar ausgebildet ist.

Weiterhin ist es erfindungsgemäß bevorzugt, dass die Freigabe der Energie des Energiespeichers und/oder die Aktivierung des Auslöseaktuator durch einen Unfall- und/oder Sicherheitssensor des Fahrzeugs steuerbar und/oder auslösbar ist.

Hierdurch ist es erfindungsgemäß in vorteilhafter Weise möglich, dass die erfindungsgemäß Kopfstütze in ein bestehendes Sicherheitssystem eines Fahrzeugs integriert wird und/oder, dass die Kopfstütze nur im Falle eines Unfalls mit dem Erzeugungspotential eines Schleudertraumas von der Gebrauchsstellung in die Sicherheitsstellung gebracht wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt eine schematische Schnittdarstellung einer erfindungsgemäßen Kopfstütze.
- Figur 2: zeigt in einer perspektivischen Darstellung einen Teil eines Fahrzeugsitzes mit einer erfindungsgemäßen Kopfstütze.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

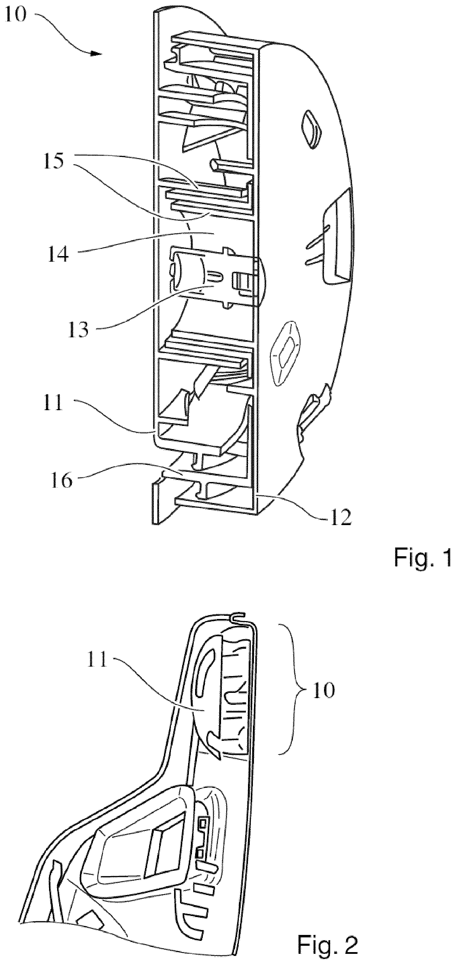

Gemäß der Figur 1 umfasst eine erfindungsgemäße Kopfstütze 10 ein erstes Teilstück 11, und ein zweites Teilstück 12. Das erste Teilstück 11 ist dem Kopf des Sitzinsassen zugewandt und wird unfallbedingt unter der Wirkung einer Entladung eines Energiespeichers 13 aus einer Gebrauchsstellung zum Kopf des Sitzinsassen hin entlang einer Verlagerungsrichtung in eine Sicherheitsstellung verlagert.

Der Energiespeicher 13 wird insbesondere mittels eines Auslöseaktuators angesteuert und bildet mit dem Auslöseaktuator eine Baueinheit.

Insbesondere ist der Energiespeicher 13 und der Auslöseaktuator zwischen dem ersten Teilstück 11 und dem zweiten Teilstück 12 der Kopfstütze 10 angeordnet.

Bei dem ersten Teilstück 11 handelt es sich insbesondere um ein Polsterelement (bzw. das erste Teilstück 11 weist ein Polsterelement auf), an welches der Kopf des Sitzinsassen angelegt bzw. abgestützt werden kann.

Bei dem zweiten Teilstück 13 der Kopfstütze 10 handelt es sich insbesondere um einen Grundkörper der Kopfstütze 10, der entweder - wie in Figur 2 dargestellt - in den Fahrzeugsitz bzw. in dessen Rückenlehne integriert ist oder aber - alternativ hierzu - über Haltestangen starr oder auch höhen- und/oder neigungsverstellbar mit der Rückenlehne des Fahrzeugsitzes verbunden ist.

Die Auslösung des Energiespeichers 13 zwischen dem ersten Teilstück 11 und dem zweiten Teilstück 13 bewirkt die Verlagerung des ersten Teilstücks 11 in die Bewegungsrichtung auf den Kopf des Sitzinsassen hin. Der Auslöseaktuator kann beispielsweise mit der Fahrzeugelektronik verbunden sein und im Falle eines Unfalls durch Unfall- und/oder Sicherheitssensoren ausgelöst werden.

Erfindungsgemäß ist in der Kopfstütze 10 zwischen dem ersten Teilstück 11 und dem zweiten Teilstück 12 ein Expansionsraum 14 ausgebildet. Innerhalb des Expansionsraums 14 bzw. mit dem Expansionsraum 14 verbunden ist der Energiespeicher, insbesondere in Form eines Gasgenerators oder eines Hitze- bzw. Wärmegenerators, angeordnet. Bei einer Aktivierung (insbesondere durch den Auslöseaktuator) des Gasgenerators oder des Hitze- bzw. Wärmegenerators wird schlagartig ein Überdruck im Expansionsraum 14 erzeugt. Dieser Überdruck bewirkt - relativ zum zweiten Teilstück 12 - eine Bewegung des ersten Teilstücks 11 in Richtung zum Kopf des Fahrzeugsitzinsassen hin.

Erfindungsgemäß ist es insbesondere vorgesehen, dass zwischen dem ersten Teilstück 11 und dem zweiten Teilstück 12 ein Verschiebemittel 16 vorgesehen ist, welches mit dem ersten Teilstück 11 derart über eine Helixförmige Anbindung angebunden ist, dass eine Drehbewegung des ersten Teilstücks 11 relativ zum Verschiebemittel 16 zu einer Relativbewegung des ersten Teilstück 11 in Richtung zum Kopf des Insassen des Fahrzeugsitzes hin führt und welches darüber hinaus mit dem zweiten Teilstück 12 derart über eine weitere Helixförmige Anbindung angebunden ist, dass eine Drehbewegung des Verschiebemittels relativ zum zweitenTeilstück 12 zu einer Relativbewegung des Verschiebemittels 16 relativ zum zweiten Teilstück 12 in Richtung zum Kopf des Insassen des Fahrzeugsitzes hin führt.

Der Expansionsraum 14 ist erfindungsgemäß insbesondere abgedichtet vorgesehen, beispielsweise mittels eines oder einer Mehrzahl von Abdichtungsmittel, insbesondere Gummielemente, besonders bevorzugt ein O-Ring oder eine Mehrzahl von gleichartigen oder unterschiedlichen O-Ringen. Insbesondere ist es bevorzugt, dass sowohl zwischen dem ersten Teilstück 11 und dem Verschiebemittel 16 ein Abdichtungsmittel 15, insbesondere ein O-Ring, angeordnet ist, als auch zwischen dem Verschiebemittel 16 und dem zweiten Teilstück 12 ein Abdichtungsmittel 15, insbesondere ein O-Ring, angeordnet ist.

### BEZUGSZEICHENLISTE

- 10: Kopfstütze
- 11: erstes Teilstück
- 12: zweites Teilstück
- 13: Energiespeicher
- 14: Expansionsraum
- 15: Abdichtungsmittel
- 16: Verschiebemittel

## Patentansprüche

1. Kopfstütze (10) für einen Fahrzeugsitz, wobei die Kopfstütze (10) mindestens ein dem Kopf eines Sitzinsassen zugewandtes erstes Teilstück (11) aufweist, wobei die Kopfstütze (10) ein zweites Teilstück (12) aufweist, wobei zwischen dem ersten Teilstück (11) und dem zweiten Teilstück (12) mindestens ein Energiespeicher (13) mit Auslöseaktuator angeordnet ist, wobei das erste Teilstück (11) unfallbedingt unter der Wirkung einer Entladung des mittels des Auslöseaktuators angesteuerten Energiespeichers - relativ zum zweiten Teilstück (12) - aus einer Gebrauchsstellung zum Kopf des Sitzinsassen hin entlang einer Verlagerungsrichtung in eine Sicherheitsstellung verlagerbar ist, wobei die Kopfstütze (10) derart konfiguriert ist, dass während der unfallbedingten und durch die Wirkung der Entladung des Energiespeichers hervorgerufenen Verlagerung des ersten Teilstücks (11) relativ zum zweiten Teilstück (12) eine Vergrößerung des Volumens eines Expansionsraums (14) bewirkt wird, wobei die Kopfstütze (10) zur Abgrenzung des Expansionsraums (14) ein Abdichtungsmittel (15) zwischen dem ersten Teilstück (11) und dem zweiten Teilstück (12) aufweist, **dadurch gekennzeichnet, dass** die Kopfstütze (10) zwischen dem ersten Teilstück (11) und dem zweiten Teilstück (12) ein Verschiebemittel (16) zur Verlagerung des ersten Teilstücks (11) aus der Gebrauchsstellung in die Sicherheitsstellung aufweist, wobei das Verschiebemittel (16) mit dem ersten Teilstück (11) derart über eine helixförmige Anbindung angebunden ist, dass eine Drehbewegung des ersten Teilstücks (11) relativ zum Verschiebemittel (16) zu einer Relativbewegung des ersten Teilstück (11) in Richtung zum Kopf des Insassen des Fahrzeugsitzes hin führt, wobei das Verschiebemittel (16) mit dem zweiten Teilstück (12) derart über eine weitere helixförmige Anbindung angebunden ist, dass eine Drehbewegung des Verschiebemittels (16) relativ zum zweiten Teilstück (12) zu einer Relativbewegung des Verschiebemittels (16) relativ zum zweiten Teilstück (12) in Richtung zum Kopf des Insassen des Fahrzeugsitzes hin führt, wobei das Verschiebemittel (16) mit dem ersten Teilstück (11) und/oder mit dem zweiten Teilstück (12) verrastbar ausgebildet ist, insbesondere bei in die Sicherheitsstellung des ersten Teilstücks (11) relativ zum zweiten Teilstück (12) bewegtem ersten Teilstück (11).

2. Kopfstütze (10) nach Anspruch 1, **dadurch gekennzeichnet, dass** der Energiespeicher (13) und der Aktuator eine Baueinheit bilden, insbesondere in Form eines Gasgenerators oder eines Hitzegenerators oder eines Wärmegenerators oder eines kompakten Gasgenerators oder eines kompakten Hitzegenerators oder eines kompakten Wärmegenerators.

3. Kopfstütze (10) nach einem der vorhergehenden Ansprüche, **dadurch gekennzeichnet, dass** der Energiespeicher (13) ein pyrotechnischer Energiespeicher ist.

4. Kopfstütze (10) nach einem der vorhergehenden Ansprüche, **dadurch gekennzeichnet, dass** das Abdichtungsmittel (15) ein O-Ring oder eine Mehrzahl von O-Ringen ist.

5. Kopfstütze (10) nach einem der vorhergehenden Ansprüche, **dadurch gekennzeichnet, dass** die Kopfstütze (10)
-- in einem Fahrzeugsitz integriert angeordnet ist oder
-- über paarige Haltestangen mit einer Sitzrückenlehne eines Fahrzeugsitzes verbunden ist.

6. Kopfstütze (10) nach einer der vorhergehenden Ansprüche, **dadurch gekennzeichnet, dass** das erste Teilstück (11) wenigstens ein Polsterelement umfasst.

7. Kopfstütze (10) nach einer der vorhergehenden Ansprüche, **dadurch gekennzeichnet, dass** das zweite Teilstück (12) relativ zum Fahrzeugsitz oder relativ zur Sitzrückenlehne des Fahrzeugsitzes verstellbar, insbesondere in Längsrichtung verschiebbar ausgebildet ist.

8. Kopfstütze (10) nach einem der vorhergehenden Ansprüche, **dadurch gekennzeichnet, dass** die Freigabe der Energie des Energiespeichers (13) und/oder die Aktivierung des Auslöseaktuator durch einen Unfall- und/oder Sicherheitssensor des Fahrzeugs steuerbar und/oder auslösbar ist.

## Claims

1. Headrest (10) for a vehicle seat, wherein the headrest (10) has at least one first sub-piece (11) which faces the head of a seat occupant, wherein the headrest (10) has a second sub-piece (12), wherein at least one energy storage device (13) with a trigger actuator is arranged between the first sub-piece (11) and the second sub-piece (12), wherein the first sub-piece (11) is able to be moved - relative to the second sub-piece (12) - out of a use position into a safety position along a movement direction towards the head of the seat occupant under the effect of a discharge of the energy storage device, which is actuated by means of the trigger actuator, as a result of an accident, wherein the headrest (10) is configured such that the volume of an expansion area (14) is increased while the first sub-piece (11) is moved relative to the second sub-piece (12) as a result of an accident and by means of the effect of the discharge of the energy storage device, wherein the headrest (10) has a sealing means (15) between the first sub-piece (11) and the second sub-piece (12) in order to delimit the expansion area (14), **characterized in that** headrest (10) has a displacement means (16) between the first sub-piece (11) and the second sub-piece (12) for displacing the first sub-piece (11) from the use position into the safety position, wherein the displacement means (16) is attached to the first sub-piece (11) via a helical connection such that a rotational movement of the first sub-piece (11) relative to the displacement means (16) leads to a relative movement of the first-sub-piece (11) towards the head of the occupant of the vehicle seat, wherein the displacement means (16) is attached to the second sub-piece (12) via a further helical connection such that a rotational movement of the displacement means (16) relative to the second sub-piece (12) leads to a relative movement of the displacement means (16) relative to the second sub-piece (12) towards the head of the occupant of the vehicle seat, wherein the displacement means (16) is configured so as to be able to be latched to the first sub-piece (11) and/or to the second sub-piece (12), in particular when the first sub-piece (11) is moved relative to the second sub-piece (12) into the safety position of the first sub-piece (11).

2. Headrest (10) according to Claim 1, **characterized in that** the energy storage device (13) and the actuator form a structural unit, in particular in the form of a gas generator or a heat generator or a thermal generator or a compact gas generator by compact heat generator or a compact thermal generator.

3. Headrest (10) according to either of the preceding claims, **characterized in that** the energy storage device (13) is a pyrotechnical energy storage device.

4. Headrest (10) according to one of the preceding claims, **characterized in that** the sealing means (15) is an O-ring or a plurality of O-rings.

5. Headrest (10) according to one of the preceding claims, **characterized in that** the headrest (10)
-- is arranged integrated in a vehicle seat or
-- is connected via paired retaining rods to a seat backrest of a vehicle seat.

6. Headrest (10) according to one of the preceding claims, **characterized in that** the first sub-piece (11) comprises at least one upholstery element.

7. Headrest (10) according to one of the preceding claims, **characterized in that** the second sub-piece (12) is configured so as to be able to be adjusted relative to the vehicle seat or relative to the seat backrest of the vehicle seat, in particular so as to be able to be displaced in the longitudinal direction.

8. Headrest (10) according to one of the preceding claims, **characterized in that** the release of the energy of the energy storage device (13) and/or the actuation of the trigger actuator is able to be controlled and/or triggered by an accident sensor and/or safety sensor of the vehicle.

## Revendications

1. Appui-tête (10) destiné à un siège de véhicule, l'appui-tête (10) comportant au moins une première partie (11) dirigée vers la tête d'un occupant de siège, l'appui-tête (10) comportant une deuxième partie (12), au moins un dispositif accumulateur d'énergie (13) pourvu d'un actionneur de déclenchement étant disposé entre la première partie (11) et la deuxième partie (12), la première partie (11) pouvant être déplacée en cas d'accident d'une position d'utilisation par rapport à la tête de l'occupant de siège dans une direction de déplacement vers une position de sécurité sous l'effet d'une détente de l'accumulateur d'énergie commandée par l'actionneur de déclenchement, par rapport à la deuxième partie (12), l'appui-tête (10) étant conçu de manière à générer une augmentation du volume d'un espace d'expansion (14) lors du déplacement de la première partie (11) par rapport à la deuxième partie (12) qui est dû à l'accident et qui est provoqué par l'effet de détente de l'accumulateur d'énergie, l'appui-tête (10) comportant un moyen d'étanchéité (15) entre la première partie (11) et la deuxième partie (12) pour délimiter l'espace d'expansion (14), **caractérisé en ce que** l'appui-tête (10) comporte entre la première partie (11) et la deuxième partie (12) un moyen coulissant (16) destiné à déplacer la première partie (11) de la position d'utilisation à la position de sécurité, le moyen coulissant (16) étant relié à la première partie (11) par une liaison hélicoïdale de telle sorte qu'un mouvement de rotation de la première partie (11) par rapport au moyen coulissant (16) entraîne un mouvement relatif de la première partie (11) en direction de la tête de l'occupant du siège de véhicule, le moyen coulissant (16) étant relié à la deuxième partie (12) par une autre liaison hélicoïdale de manière à ce qu'un mouvement de rotation du moyen coulissant (16) par rapport à la deuxième partie (12) entraîne un mouvement relatif du moyen coulissant (16) par rapport à la deuxième partie (12) en direction de la tête de l'occupant du siège de véhicule, le moyen coulissant (16) étant conçu pour être encliquetable sur la première partie (11) et/ou sur la deuxième partie (12), en particulier lorsque la première partie (11) est déplacée dans la position de sécurité de la première partie (11) par rapport à la deuxième partie (12) .

2. Appui-tête (10) selon la revendication 1, **caractérisé en ce que** l'accumulateur d'énergie (13) et l'actionneur forment une unité structurelle, notamment sous la forme d'un générateur de gaz ou d'un générateur de chaleur ou d'un générateur thermique ou d'un générateur de gaz compact ou d'un générateur thermique compact ou d'un générateur de chaleur compact.

3. Appui-tête (10) selon l'une des revendications précédentes, **caractérisé en ce que** l'accumulateur d'énergie (13) est un accumulateur d'énergie pyrotechnique.

4. Appui-tête (10) selon l'une des revendications précédentes, **caractérisé en ce que** le moyen d'étanchéité (15) est un joint torique ou une pluralité de joints toriques.

5. Appui-tête (10) selon l'une des revendications précédentes, **caractérisé en ce que** l'appui-tête (10)
- est disposé dans un siège de véhicule ou
- est relié à un dossier d'un siège de véhicule par le biais de barres de retenue appariées.

6. Appui-tête (10) selon l'une des revendications précédentes, **caractérisé en ce que** la première partie (11) comprend au moins un élément de rembourrage.

7. Appui-tête (10) selon l'une des revendications précédentes, **caractérisé en ce que** la deuxième partie (12) est réglable par rapport au siège de véhicule ou par rapport au dossier du siège de véhicule, en particulier est conçue pour coulisser dans la direction longitudinale.

8. Appui-tête (10) selon l'une des revendications précédentes, **caractérisé en ce que** la libération de l'énergie de l'accumulateur d'énergie (13) et/ou l'activation de l'actionneur de déclenchement peuvent être commandées et/ou déclenchées par un capteur d'accident et/ou de sécurité du véhicule.
